# EUROPEAN PATENT SPECIFICATION

(11) **EP 3 504 312 B1**
(45) Date of publication and mention of the grant of the patent: **13.05.2020**
(21) Application number: 17751418.9
(22) Date of filing: 15.08.2017
(51) Int. Cl.: C11D 3/37, C11D 11/00, C08F 220/56, C08F 251/00

(54) **HARD SURFACE TREATMENT COMPOSITION**
ZUSAMMENSETZUNG ZUR BEHANDLUNG HARTER OBERFLÄCHEN
COMPOSITION DE TRAITEMENT DE SURFACE DURE

(30) Priority: 25.08.2016 WO PCT/CN2016/096671; 12.10.2016 EP 16193457
(43) Date of publication of application: 03.07.2019
(73) Proprietor: Unilever N.V., 3013 AL Rotterdam (NL); Unilever PLC, London, Greater London EC4Y 0DY (GB)
(72) Inventor: GRANERO, Micaela, 26841 Casalpusterlengo (LO) (IT); JAMIESON, Andrew, Stephen, Bebington Wirral Merseyside CH63 3JW (GB); TAO, Qingsheng, Shanghai 200061 (CN); ZHONG, Ye, Shanghai 200335 (CN)
(74) Representative: Corsten, Michael Allan
(86) International application number: PCT/EP2017/070656
(87) International publication number: WO 2018/036864

(56) References cited:
- WO-A1-01/42415
- WO-A1-2013/064648
- US-A1- 2011 009 309
- US-A1- 2011 118 168
- US-A1- 2012 088 420
- US-A1- 2013 157 921

## Description

### FIELD OF THE INVENTION

The present invention relates to a hard surface treatment composition. In particular, the composition comprises both amphoteric acrylic copolymer and amphoteric modified polysaccharide. It was surprisingly found that such composition was capable of delivering good fast-drying performance without noticeable residue/stain on the hard surface.

### BACKGROUND OF THE INVENTION

Hard surface treatment compositions have been widely employed for a long time to keep the household appliances clean and shine. The hard surface treatment compositions typically contain a variety of ingredients which may provide an optimal cleaning experience to the user. For example, fast-drying polymers may be added into hard surface treatment compositions to provide resistance to hard water, easy clean after first time use with repeated use, and etcetera.

US2013/157921 is directed to the removal of acidic cleanser that can be quickly rinsed off and discloses an acidic hard surface treatment composition comprising a copolymer having at least one quaternized monomer ("acrylamidopropyl trimethylammonium chloride/sodium acrylate/ethyl acrylate copolymer") and a microbially derived polysaccharide, the weight ratio of the copolymer to the modified polysaccharide being in the range of 1.5:1 to 2:1.
However, there may be some problem when incorporated some fast-drying polymer, such as amphoteric acrylic copolymer, into a hard surface treatment composition. There may be undesirable residue/stain on the treated hard surface perhaps due to the addition of the fast-drying polymer.

Therefore, we recognized that there is a need to develop a way to include the fast-drying polymer into the hard surface treatment composition without generation of residue/stains on the treated hard surface. It was surprisingly found that by including amphoteric acrylic copolymer and amphoteric modified polysaccharide in a weight ratio of 0.75:1 to 3:1, the hard surface treatment composition is capable of providing good fast-drying performance, without generation of residue/stain on the treated hard surface.

### SUMMARY OF THE INVENTION

In a first aspect, the present invention is directed to a hard surface treatment composition according to claim 1, comprising amphoteric acrylic copolymer and amphoteric modified polysaccharide, wherein the weight ratio of the amphoteric acrylic copolymer to the amphoteric modified polysaccharide is from 0.75:1 to 3:1 and the amphoteric acrylic copolymer is different from the amphoteric modified polysaccharide.

In a second aspect, the present invention is directed to a method according to claim 11, for providing surface shine, fast drying, easy secondary cleaning, long-lasting cleaning or a combination thereof comprising a step of contacting the hard surface with a composition of the present invention.

In a third aspect, the present invention is directed to use according to claim 12, of the composition of the present invention for surface shine, fast drying, easy secondary cleaning, long-lasting cleaning or a combination thereof.

All other aspects of the present invention will more readily become apparent upon considering the detailed description and examples which follow.

### DETAILED DESCRIPTION OF THE INVENTION

All amounts are by weight of the composition, unless otherwise specified.

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

"Hard surface" of the present invention generally refers to any surface in household including the windows, kitchen, bathroom, toilet, furniture, or floor. These surfaces, for example, may be made of glass, glazed ceramics, metal, stone, plastics, lacquer, wood, or combination thereof.

"Copolymer" as used herein refers to a polymer comprising at least two differing monomer compositions.

"Amphoteric" as used herein refers to the polymers have both acid and basic groups and show acidic or basic behavior depending on the conditions

"pH values" herein referred to values are measured at a temperature of 25 °C.

The amphoteric acrylic copolymer for the present invention comprises, as polymerized monomers, at least monomer (a) and monomer (b), wherein:
monomer (a) is presented by formula of

   CH₂=CR¹-CO-NH-R²-N⁺R³R⁴R⁵X⁻ (1),

   wherein:
   R¹ represents a hydrogen atom or a C₁-C₄ alkyl radical,
   R² represents a linear or branched C₁-C₁₂ alkylene radical,
   R³, R⁴, and R⁵ independently represent a hydrogen atom, an C₁-C₁₈ alkyl radical, and
   X⁻ represents an anion selected from the group of halogens, sulfates, alkylsulfates, hydroxide, phosphate, acetate, or formate; and
monomer (b) is an ethylenically unsaturated acids and/or salts thereof.

Preferably the monomer (a) is presented by formula (1), in which R¹ is a methyl radical, or ethyl radical, R² is a linear C₂-C₆ alkylene radical, R³, R⁴, and R⁵ independently represent a hydrogen atom, an C₁-C₆ alkyl radical, and X⁻ represents an anion selected from the group of halogens, sulfates, alkylsulfates, hydroxide, phosphate, acetate, or formate. More preferably monomer (a) is presented by formula (1), in which R¹ is a methyl radical, R² is a -CH₂-CH₂-CH₂- group, R³, R⁴, and R⁵ each represent a methyl radical, and X⁻ represents an anion selected from the group of halogens, sulfates, alkylsulfates, hydroxide, phosphate, acetate, or formate. Most preferably, the monomer (a) is 3-trimethylammoniumpropylmethacrylamide chloride (abbreviated as MAPTAC)

Monomer (b) is preferably a C₃-C₈ ethylenically unsaturated acids and/or salts thereof. More preferably, monomer (b) is selected from acrylic acid, methacrylic acid, or salt thereof. Even more preferably monomer (b) is selected from acrylic acid, alkali metal or ammonium salts of acrylic acid.

The molar ratio of monomer (a) to monomer (b) is preferably from 1:10 to 10:1, more preferably from 1:6 to 4:1, and even more preferably from 1:3 to 2:1.

Even more preferably, the amphoteric acrylic copolymer comprises, as polymerized monomers, at least monomer (a) and monomer (b), wherein monomer (a) is 3-trimethylammoniumpropylmethacrylamide chloride and monomer (b) is acrylic acid or alkali metal salts of acrylic acid.

Preferably, the amphoteric acrylic copolymer comprises addition monomers of ethyl acrylate, 2-acrylamido-2-methylpropane-sulfonic acid, and/or N-isopropylamide, as polymerized monomers.

Particularly preferred amphoteric acrylic copolymer is acrylamidopropyltrimethylammonium chloride/sodium acrylate/ethyl acrylate copolymer, acrylamidopropyltrimethylammonium chloride/sodium acrylate/N-isopropylamide/2-acrylamido-2-methylpropane-sulfonic acid copolymer, or a mixture thereof. For example, the acrylamidopropyltrimethylammonium chloride/sodium acrylate/ethyl acrylate copolymer suitable for the present invention is commercially available from BASF under the name of Polyquart® Ampho 149, the acrylamidopropyltrimethylammonium chloride/sodium acrylate/N-isopropylamide/2-acrylamido-2-methylpropane-sulfonic acid copolymer is commercially available from BASF under the name of Polyquart® Pro A.

The amphoteric acrylic copolymer preferably has a weight average molecular weight (M_{w}), measured by aqueous gel permeation chromatography (GPC) with light scattering detection (SEC-MALLS), in the range of from 10,000 to 500,000 Da, more preferably from 50,000 to 350,000 Da and even more preferably from 100,000 to 200,000 Da.

The amphoteric acrylic copolymer is present in amount of from 0.0001 to 3%, preferably from 0.001 to 1%, more preferably from 0.008 to 0.1% and most preferably from 0.01 to 0.05% by weight of the composition.

The amphoteric modified polysaccharide suitable for the present invention is preferably an amphoteric modified starch, more preferably amphoteric modified Zea Mays (Corn) starch. The amphoteric modified polysaccharide comprises units of aforementioned monomer (a). Preferably, the amphoteric modified polysaccharide comprises units of the aforementioned monomers (a) and (b). More preferably the amphoteric modified polysaccharide comprises units of at least monomer (a) and monomer (b), wherein monomer (a) is 3-trimethylammoniumpropylmethacrylamide chloride and monomer (b) is acrylic acid or alkali metal salts of acrylic acid. Still even more preferably the amphoteric modified polysaccharide is modified by 3-trimethylammoniumpropylmethacrylamide chloride and sodium acrylate.

Most preferably, the amphoteric modified polysaccharide has an INCI name of polyquaternium-95. Polyquaternium-95 is commercially available from BASF under the name of Polyquart® Ecoclean.

The amphoteric modified polysaccharide is present in amount of from 0.0001 to 3%, more preferably from 0.001 to 1%, even more preferably from 0.008 to 0.1 % and most preferably from 0.01 to 0.05% by weight of the composition.

Preferably the weight ratio of the amphoteric acrylic copolymer to the amphoteric modified polysaccharide is from 0.85:1 to 2:1, and most preferably from 0.9:1 to 1.3:1.

Preferably, the composition additionally comprises non-ionic surfactant. The non-ionic surfactant preferably comprises compounds produced by the condensation of simple alkylene oxides with aliphatic or alkyl-aromatic hydrophobic compound, preferably with aliphatic or alkyl-aromatic alcohol; alkyl polyglucosides; or a mixture thereof. More preferably, the non-ionic surfactant comprises ethoxylated alkyl alcohols, alkyl polyglucosides, or a mixture thereof. Even more preferably the non-ionic surfactants are ethoxylated alkyl alcohols, alkyl polyglucosides, or a mixture thereof. Still even more preferably the non-ionic surfactants are ethoxylated C₈-C₁₆ alkyl alcohols, C₅-C₂₀ alkyl polyglucosides, or a mixture thereof.

Ethoxylated alkyl alcohols are preferably ethoxylated C₈-C₁₂ alkyl alcohols, whereby yet more preferably the average degree of ethoxylation is between 5 and 8. An example of particularly effective (and therefore preferred) surfactants are ethoxylated C₉-C₁₁ alkyl alcohols with an average degree of ethoxylation of 8, including for instance the commercially surfactant Neodol 91-8.

Preferred alkyl polyglucosides are represented by formula of RO - (G)ₙ, wherein R is a branched or straight chain alkyl group which may be saturated or unsaturated, G is a saccharide group, and the degree of polymerisation, n, may have a value of from 1 to 10; Preferably R has a mean alkyl chain length of from C₅ to C₂₀, G is selected from C₅ or C₆ monosaccharide residues and n has a value of from 1 to 6; more preferably R has a mean alkyl chain length of from C₆ to C₁₆, G is glucose and n has a value of from 1 to 2. Suitable alkyl polyglucosides include those from the Glucopon® range, e.g. Glucopon® 425 N/HH, and Glucopon® 215 UP from BASF.

Preferably, the composition comprises ethoxylated alkyl alcohols, alkyl polyglucosides, or a mixture thereof. More preferably the composition comprises ethoxylated C₈-C₁₆ alkyl alcohols, C₅-C₂₀ alkyl polyglucosides, or a mixture thereof.

Preferably, the amount of the non-ionic surfactant is 0.01 to 20%, more preferably from 0.1 to 15%, even more preferably 0.3 to 7%, and most preferably from 1 to 5% by weight of the composition when present.

To adjust the pH of the composition, the composition preferably comprises an organic acid having an average number molecular weight of no greater than 400, more preferably the composition comprises an organic acid having an average number molecular weight of no greater than 200, even more preferably the composition comprises citric acid, lactic acid, maleic acid, malic acid, glycolic acid, or a mixture thereof, and still even more preferably the composition comprises citric acid, lactic acid, or a mixture thereof. If present, the amount of organic acid is preferably from 0.1 to 15%, more preferably from 1 to 5% by weight of the composition.

The hard surface treatment composition of the present invention preferably comprises at least 30% of water by weight of the composition. More preferably, the composition comprises at least 50%, even more preferably from 70 to 99%, still even more preferably from 77 to 97% and most preferably from 84 and 93% of water by weight of the composition.

The composition preferably comprises organic solvents selected from C₁-₈ alcohol, ether having 2 to 16 carbon atoms, ester of C2-24 organic acid, C6-18 cyclic terpene, and a mixture thereof. More preferably the composition comprises ethanol, isopropyl alcohol, n-butanol, iso-butanol, n-butoxypropanol, dipropylene glycol, diethylene glycol monobutyl ether, dipropylene glycol monobutyl ether, propylene glycol monomethyl ether, propylene glycol monopropyl ether, methyl ester of caprylic acid, methyl ester of heptylic acid, dimethyl-2-methyl glutarate, esters of polyglycerol, soybean oil methyl ester, limonene or a mixture thereof. Even more preferably the composition comprises ethanol, isopropyl alcohol, dipropylene glycol, diethylene glycol monobutyl ether, dipropylene glycol monobutyl ether, propylene glycol monomethyl ether, propylene glycol monopropyl ether, methyl ester of caprylic acid, methyl ester of heptylic acid, dimethyl-2-methyl glutarate, esters of polyglycerol, soybean oil methyl ester, limonene or a mixture thereof. Most preferably the composition comprises isopropyl alcohol, dipropylene glycol monobutyl ether, propylene glycol monomethyl ether, propylene glycol monopropyl ether, or a mixture thereof. The organic solvent may be present in the composition in a concentration of 0 to 20%, preferably 0.5-15% by weight of the composition.

The composition may comprise from 0.2 to 1.2% of thickener by weight of the composition. This provides the optimum rheological properties of the composition. Suitable thickeners include the modified celluloses for example hydroxyethyl cellulose.

The hard surface treatment composition according to the invention may further comprise dyes, perfume, and/or preservatives. If present, the amount may be from 0.001 to 5% by weight of the composition.

The composition preferably has a pH value of from 1 to 4.5, more preferably from 1.5 to 4, even more preferably from 2.0 to 3.0.

To achieve a consumer favourable appearance, the composition preferably has a transmittance of at least 20%, more preferably at least 40%, even more preferably at least 60% and still even more preferably from 70 to 95%. Values of transmittance quoted herein are percentage that near infrared light having wavelength of 880 nm transmits a 2.5 cm thick sample of the composition at 25 °C. The transmittance of the composition may be tested by Turbiscan Lab Expert (ex Formulation, France)

The composition may be packed in any form, but preferably is packaged as a conventional hard surface treatment or cleaning product. The preferred packaging is a spray applicator. Pump dispersers (whether spray or non-spray pumps) and pouring applications (bottles etc) are also possible. It is also possible to impregnate a wipe with the composition. Preferably the composition is a toilet or bathroom cleaner.

The present invention also provides a method for providing surface shine, fast drying, easy secondary cleaning, long-lasting cleaning or a combination thereof comprising a step of contacting the hard surface with a composition of the present invention; and use of the composition of the composition of the present invention for surface shine, fast drying, easy secondary cleaning, long-lasting cleaning or a combination thereof.

The invention will now be described with reference to the following non-limiting examples.

### Examples

### Example 1

This example demonstrated the preparation of formulations.

**Table 1**

| Ingredient | Samples (active% by weight) | | | | | | |
|---|---|---|---|---|---|---|---|
| | A | B | 1 | 2 | C | D | E |
| Neodol 91-8 ex Shell ^{a} | 2.5 | 2.5 | 2.5 | 2.5 | 2.5 | 2.5 | 2.5 |
| Glucopon® 215 ex BASF ^{b} | 1.0 | 1.0 | 1.0 | 1.0 | 1.0 | 1.0 | 1.0 |
| Polyquart® Pro A ex BASF ^{c} | 0.05 | 0.04 | 0.03 | 0.025 | 0.02 | 0.01 | 0 |
| Polyquart® Ecoclean ex BASF ^{d} | 0 | 0.01 | 0.02 | 0.025 | 0.03 | 0.04 | 0.05 |
| Citric acid | 3.5 | 3.5 | 3.5 | 3.5 | 3.5 | 3.5 | 3.5 |
| NaOH | 0.085 | 0.085 | 0.085 | 0.085 | 0.085 | 0.085 | 0.085 |
| De-ionized Water | To 100 | To 100 | To 100 | To 100 | To 100 | To 100 | To 100 |

| | | | | | | | |
|---|---|---|---|---|---|---|---|
| a: C₉-C₁₁ alcohol ethoxylate, (8EO). b: C₈-C₁₆Alkyl polyglycoside. c:acrylamidopropyltrimethylammonium chloride/sodium acrylate/N-isopropylamide/2-acrylamido-2-methylpropane-sulfonic acid copolymer. d: Polyquaternium-95: a copolymer of Zea Mays (Corn) Starch, Acrylic Acid and acrylamidopropyltrimethylammonium chloride monomers. | | | | | | | |

A series of samples were prepared according to Table 1.

### Example 2

This example demonstrates the performance of fast-drying and residue reduction.

Black glazed ceramic tiles (15cmx15cm) were pre-washed and dried, then placed in a 3 x 3 grid. 4 g of samples was placed in a clockwise circle on the tile grid. Wet cloth (4 times weight of initial dry cloth) was immediately utilized to wipe in zig path on tile grid in one rinse cycle. Then the rinsing cycle was repeated twice by changing the dampen cloth in each rinse cycle. The centered tile was taken out for further evaluation of performance of residue and fast-drying.

The residue was carefully observed under a spotlight and/or human naked eye. The fast-drying performance was also evaluated. The tiles were placed with a tilting angle of 60° and then flushed by tap water with a flow rate of about 60L/hours for 10 seconds. The performance of fast-drying and residue reduction for each samples were summarized in table 2.

**Table 2**

| Samples | Item | |
|---|---|---|
| | Residue | Fast-drying |
| A | A large number of opaque spots/streaks can be observed | Water film flowed away in 7-8 seconds, no water droplets left on the surface. |
| B | A number of translucent/opaque spots can be found | Water film flowed away in 5-6 seconds, no water droplets left on the surface. |
| 1 | Streak free and no residue can be noticed by naked eye | Water film flowed away in 7-8 seconds, no water droplets left on the surface. |
| 2 | Streak free and no residue can be noticed by naked eye | Water film flowed away in 7-8 seconds, no water droplets left on the surface. |
| C | Streak free and no residue can be noticed by naked eye | Water film flowed away in 15-20 seconds, but quite a few water droplets left on the surface |
| D | Shiny and no residue can be noticed under spot light | Continuous water film retained on the whole surface. It took more than 1 min to dry. |
| E | Shiny and no residue can be noticed under spot light | Continuous water film retained on the whole surface. It took more than 1 min to dry. |

Table 2 shows the results for fast-drying and residue of the samples. It was surprisingly found that compositions of the present invention were capable of providing good fast-drying without generating noticeable residue/stain on the hard surface. It was also surprisingly found that the tile treated by sample 2 is streak-free even under spotlight. In contrast, a number of spots can be found in the tile treated by sample 1 under spotlight.

## Claims

1. A hard surface treatment composition comprising:
a) 0.0001 to 3% of amphoteric acrylic copolymer by weight of the composition; and
b) 0.0001 to 3% of amphoteric modified polysaccharide by weight of the composition;
wherein:
(i) the weight ratio of the amphoteric acrylic copolymer to the amphoteric modified polysaccharide is from 0.75:1 to 3:1;
(ii)the amphoteric acrylic copolymer is different from the amphoteric modified polysaccharide;
(iii) the amphoteric acrylic copolymer comprises, as polymerized monomers, at least monomer (a) and monomer (b), wherein:
monomer (a) is presented by formula of
CH₂=CR¹-CO-NH-R²-N⁺R³R⁴R⁵X⁻ (1),
wherein:
R¹ represents a hydrogen atom or a C₁-C₄ alkyl radical,
R² represents a linear or branched C₁-C₁₂ alkylene radical,
R³, R⁴, and R⁵ independently represent a hydrogen atom, an C₁-C₁₈ alkyl radical, and
X⁻ represents an anion selected from the group of halogens, sulfates, alkylsulfates, hydroxide, phosphate, acetate, or formate; and
monomer (b) is an ethylenically unsaturated acids and/or salts thereof; and
(iv) the amphoteric modified polysaccharide comprises units of monomer (a).

2. The composition according to claim 1 wherein the amphoteric acrylic copolymer comprises 3-trimethylammoniumpropylmethacrylamide chloride as polymerized monomers, preferably the amphoteric acrylic copolymer is acrylamidopropyltrimethylammonium chloride/sodium acrylate/ethyl acrylate copolymer, acrylamidopropyltrimethylammonium chloride/sodium acrylate/N-isopropylamide/2-acrylamido-2-methylpropane-sulfonic acid copolymer, or a mixture thereof.

3. The composition according to claim 1 or 2 wherein the amphoteric acrylic copolymer is present in amount of from 0.0001 to 3%, preferably from 0.008 to 0.1% by weight of the composition.

4. The composition according to any one of the preceding claims wherein the amphoteric modified polysaccharide comprises monomer units of acrylamidopropyltrimethylammonium chloride.

5. The composition according to claim 4 wherein the amphoteric modified polysaccharide is an amphoteric modified starch, preferably the amphoteric modified starch has an INCI name of polyquatemium-95.

6. The composition according to any one of the preceding claims wherein the amphoteric modified polysaccharide is present in amount of from 0.0001 to 3%, preferably from 0.008 to 0.1% by weight of the composition.

7. The composition according to any one of the preceding claims wherein the composition additionally comprises ethoxylated C₈-C₁₆ alkyl alcohols, C₅-C₂₀ alkyl polyglucosides, or a mixture thereof.

8. The composition according to any one of the preceding claims wherein the composition comprises organic acid having a molecular weight of no greater than 200, preferably the composition comprises citric acid, lactic acid, or a mixture thereof.

9. The composition according to any one of the preceding claims wherein the composition comprises water, preferably in amount of from 70 to 99% by weight of the composition.

10. The composition according to any one of the preceding claims which is a household cleansing composition.

11. A method for providing surface shine, fast drying, easy secondary cleaning, long-lasting cleaning or a combination thereof comprising a step of contacting the hard surface with a composition of any one of claims 1 to 9.

12. Use of the composition of any one of claims 1 to 9 for surface shine, fast drying, easy secondary cleaning, long-lasting cleaning or a combination thereof.

## Patentansprüche

1. Zusammensetzung zur Behandlung harter Oberflächen, umfassend:
a) 0,0001 bis 3% amphoteres Acrylcopolymer, nach Gewicht der Zusammensetzung, und
b) 0,0001 bis 3% amphoteres modifiziertes Polysaccharid, nach Gewicht der Zusammensetzung;
wobei:
(i) das Gewichtsverhältnis des amphoteren Acrylcopolymers zu dem amphoteren modifizierten Polysaccharid von 0,75:1 bis 3:1 beträgt;
(ii) das amphotere Acrylcopolymer von dem amphoteren modifizierten Polysaccharid verschieden ist;
(iii) das amphotere Acrylcopolymer als polymerisierte Monomere mindestens Monomer (a) und Monomer (b) umfasst, worin:
Monomer (a) durch die Formel
CH₂=CR¹-CO-NH-R²-N⁺R³R⁴R⁵X⁻ (1)
dargestellt ist,
worin:
R¹ ein Wasserstoffatom oder einen C₁-C₄-Alkylrest darstellt,
R² einen linearen oder verzweigten C₁-C₁₂-Alkylenrest darstellt,
R³, _{R}⁴ und R⁵ unabhängig ein Wasserstoffatom, einen C₁-C₁₈-Rest darstellen und
X⁻ ein Anion darstellt, ausgewählt aus der Gruppe von Halogenen, Sulfaten, Alkylsulfaten, Hydroxid, Phosphat, Acetat oder Formiat; und
Monomer (b) ethylenisch ungesättigte Säuren und/oder Salze davon bedeutet; und
(iv) das amphotere modifizierte Polysaccharid Einheiten von Monomer (a) umfasst.

2. Zusammensetzung nach Anspruch 1, wobei das amphotere Acrylcopolymer 3-Trimethylammoniumpropylmethacrylamidchlorid als polymerisierte Monomere umfasst, wobei das amphotere Acrylcopolymer vorzugsweise Acrylamidopropyltrimethylammoniumchlorid/ Natriumacrylat/ Ethylacrylatcopolymer, Acrylamidopropyltrimethylammoniumchlorid/ Natriumacrylat/ N-Isopropylamid/ 2-Acrylamido-2-methylpropan-sulfonsäure-copolymer oder eine Mischung davon umfasst.

3. Zusammensetzung nach Anspruch 1 oder 2, wobei das amphotere Acrylcopolymer in einer Menge von 0,0001 bis 3%, vorzugsweise von 0,008 bis 0,1%, nach Gewicht der Zusammensetzung, vorliegt.

4. Zusammensetzung nach irgendeinem der vorhergehenden Ansprüche, wobei das amphotere modifizierte Polysaccharid Monomereinheiten vom Acrylamidopropyltrimethylammoniumchlorid umfasst.

5. Zusammensetzung nach Anspruch 4, wobei das amphotere modifizierte Polysaccharid eine amphotere modifizierte Stärke ist, wobei die amphotere modifizierte Stärke vorzugsweise eine INCI-Bezeichnung Polyquaternium-95 hat.

6. Zusammensetzung nach irgendeinem der vorhergehenden Ansprüche, wobei das amphotere modifizierte Polysaccharid in einer Menge von 0,0001 bis 3%, vorzugsweise von 0,008 bis 0,1%, nach Gewicht der Zusammensetzung, vorliegt.

7. Zusammensetzung nach irgendeinem der vorhergehenden Ansprüche, wobei die Zusammensetzung zusätzlich ethoxylierte C₈-C₁₆-Alkylakohole, C₅-C₂₀-Alkylpolyglucoside oder eine Mischung davon umfasst.

8. Zusammensetzung nach irgendeinem der vorhergehenden Ansprüche, wobei die Zusammensetzung organische Säure mit einem Molekulargewicht von nicht mehr als 200 umfasst, wobei die Zusammensetzung vorzugsweise Citronensäure, Milchsäure oder eine Mischung davon umfasst.

9. Zusammensetzung nach irgendeinem der vorhergehenden Ansprüche, wobei die Zusammensetzung Wasser umfasst, vorzugsweise in einer Menge von 70 bis 99%, nach Gewicht der Zusammensetzung.

10. Zusammensetzung nach irgendeinem der vorhergehenden Ansprüche, welche eine Haushaltsreinigungszusammensetzung ist.

11. Verfahren zum Bereitstellen von Oberflächenglanz, Schnelltrocknen, leichtem Nachreinigen, dauerhaftem Reinigen oder einer Kombination davon, wobei ein Schritt des Inkontaktbringens der harten Oberfläche mit einer Zusammensetzung nach irgendeinem der Ansprüche 1 bis 9 einbezogen wird.

12. Verwendung der Zusammensetzung nach irgendeinem der Ansprüche 1 bis 9 für Oberflächenglanz, Schnelltrocknen, leichtes Nachtrocknen, dauerhaftes Reinigen oder eine Kombination davon.

## Revendications

1. Composition de traitement de surface dure comprenant :
a) 0,0001 à 3 % de copolymère acrylique amphotère en masse de la composition ; et
b) 0,0001 à 3 % de polysaccharide modifié amphotère en masse de la composition ;
dans laquelle :
(i) le rapport en masse du copolymère acrylique amphotère au polysaccharide modifié amphotère est de 0,75:1 à 3:1 ;
(ii) le copolymère acrylique amphotère est différent du polysaccharide modifié amphotère ;
(iii) le copolymère acrylique amphotère comprend, comme monomères polymérisés, au moins un monomère (a) et un monomère (b), dans laquelle :
le monomère (a) est présenté par la formule de
CH₂=CR¹-CO-NH-R²-N⁺R³R⁴R⁵X⁻ (1),
dans laquelle :
R¹ représente un atome d'hydrogène ou un radical alkyle en C₁-C₄,
R² représente un radical alkylène en C₁-C₁₂ linéaire ou ramifié,
R³, R⁴, et R⁵ représentent indépendamment un atome d'hydrogène, un radical alkyle en Ci-Cis, et
X⁻ représente un anion choisi dans le groupe d'halogènes, sulfates, alkylsulfates, hydroxyde, phosphate, acétate, ou formate ; et
le monomère (b) est des acides éthyléniquement insaturés et/ou des sels de ceux-ci ; et
(iv) le polysaccharide modifié amphotère comprend des unités de monomère (a).

2. Composition selon la revendication 1, dans laquelle le copolymère acrylique amphotère comprend du chlorure de 3-triméthylammoniumpropylméthacrylamide comme monomères polymérisés, le copolymère acrylique amphotère est de préférence un copolymère de chlorure d'acrylamidopropyltriméthylammonium/acrylate de sodium/acrylate d'éthyle, un copolymère de chlorure d'acrylamidopropyl-triméthylammonium/acrylate de sodium/N-isopropylamide/acide 2-acryl-amido-2-méthylpropane-sulfonique, ou un mélange de ceux-ci.

3. Composition selon la revendication 1 ou 2, dans laquelle le copolymère acrylique amphotère est présent dans une quantité de 0,0001 à 3 %, de préférence de 0,008 à 0,1 % en masse de la composition.

4. Composition selon l'une quelconque des revendications précédentes, dans laquelle le polysaccharide modifié amphotère comprend des unités monomères de chlorure d'acrylamidopropyltriméthylammonium.

5. Composition selon la revendication 4, dans laquelle le polysaccharide modifié amphotère est un amidon modifié amphotère, l'amidon modifié amphotère présente de préférence un nom INCI de polyquaternium-95.

6. Composition selon l'une quelconque des revendications précédentes, dans laquelle le polysaccharide modifié amphotère est présent dans une quantité de 0,0001 à 3 %, de préférence de 0,008 à 0,1 % en masse de la composition.

7. Composition selon l'une quelconque des revendications précédentes, dans laquelle la composition comprend de plus des alcools alkyliques en C₈-C₁₆ éthoxylés, des alkylpolyglucosides en C₅-C₂₀, ou un mélange de ceux-ci.

8. Composition selon l'une quelconque des revendications précédentes, dans laquelle la composition comprend un acide organique ayant une masse moléculaire d'au plus 200, la composition comprend de préférence de l'acide citrique, de l'acide lactique, ou un mélange de ceux-ci.

9. Composition selon l'une quelconque des revendications précédentes, dans laquelle la composition comprend de l'eau, de préférence dans une quantité de 70 à 99 % en masse de la composition.

10. Composition selon l'une quelconque des revendications précédentes, qui est une composition de nettoyage ménagère.

11. Procédé pour fournir un brillant de surface, séchage rapide, nettoyage secondaire facile, nettoyage de longue durée ou une combinaison de ceux-ci comprenant une étape de mise en contact de la surface dure avec une composition selon l'une quelconque des revendications 1 à 9.

12. Utilisation de la composition selon l'une quelconque des revendications 1 à 9 pour un brillant de surface, séchage rapide, nettoyage secondaire facile, nettoyage de longue durée ou une combinaison de ceux-ci.
